# EUROPEAN PATENT APPLICATION

(11) **EP 3 163 660 A1**
(43) Date of publication of application: **03.05.2017**
(21) Application number: 15810891.0
(22) Date of filing: 18.05.2015
(51) Int. Cl.: H01M 8/04, H01M 8/06, H01M 8/10, H01M 8/00, F24D 3/00

(54) **FUEL CELL MODULE HAVING INCREASED THERMAL EFFICIENCY, AND HEATING SYSTEM USING SAME AND CONTROL METHOD THEREOF**

(30) Priority: 26.06.2014 KR 20140079133; 26.06.2014 KR 20140079134; 26.06.2014 KR 20140079135
(71) Applicant: Kyungdong Navien Co., Ltd., Gyeonggi-do 450-818 (KR)
(72) Inventor: YI, Yong, Seoul 150-814 (KR); PARK, Se Jin, Seoul 151-801 (KR); KIM, Jinhyeong, Seoul 150-801 (KR); SHIN, Seockjae, Seoul 110-030 (KR); SON, Seunggil, Bucheon-si Gyeonggi-do 420-030 (KR)
(74) Representative: Krauns, Christian
(86) International application number: PCT/KR2015/004978
(87) International publication number: WO 2015/199333

(57) **Abstract**

Provided is a heating system using a fuel cell module including: a fuel cell module that receives water in a heat absorption water pipe or fuel in a heat absorption gas pipe and generates electricity and heat through an electrochemical reaction of preheated water or fuel and air supplied from the outside, wherein the heat absorption water pipe and the heat absorption gas pipe are disposed along the inner surface of a heat insulating material; a hot-water tank that stores hot water heated by heat exchange between the water introduced into the heat absorption water pipe of the fuel cell module and the interior of the heat insulating material; a heating module in which the hot water supplied from the fuel cell module or the hot-water tank is used in heating; and a hot-water supply module that controls the flow of the hot-water between the fuel cell module, the hot-water tank, and the heating module according to whether the temperature of the fuel cell module is greater than, equal to, or less than a predetermined reference value and whether the heating module is operated.

## Description

### [Technical Field]

The present invention relates to a fuel cell module with increased thermal efficiency, a heating system using the same, and a control method thereof. More particularly, the present invention relates to a fuel cell module with increased thermal efficiency, a heating system using the same, and a control method thereof, which can stably perform an operation by preheating all of fuel, air, and water introduced to a solid oxide fuel cell (SOFC) to lower a temperature of gas emitted by a burner as a main heat source than an existing temperature, increase efficiency of the entire fuel cell by reducing the fuel introduced to the burner, and further appropriately utilize the preheated water for heating according to an operation temperature of the fuel cell.

### [Background Art]

In order to resolve a global warming problem, environmental protection has been cross-nationally promoted by developing technologies for CO₂ reduction and energy efficiency improvement using a variety of renewable energy.

Particularly, the renewable portfolio standard (RPS) enforced in 2012 is the portfolio standard to be mandated to power producers over a certain scale so as to supply a predetermined amount or greater of a total of electricity amount as renewable energy power, a weighted value of a fuel cell electricity generation system is increased and the activation of the propagation has been promoted.

The fuel cell means a device converting chemical energy of fuel to electric energy and the fuel cell module generally means an electricity generation system which produces electricity by an electrochemical reaction of hydrogen in reformed gas obtained by reforming the fuel such as natural gas, methanol, and gasoline and oxygen in the air in an anode and a cathode of the stack.

In this case, Reaction Formula of each electrode and Total Reaction Formula are as follows.
Anode:

   H₂(g) → 2H⁺ + 2e-
Cathode:

   1/2O₂(g) + 2H⁺ + 2e⁻ → H₂O
Total Reaction Formula:

   H₂ + 1/2O₂ → H₂O

In the fuel cell, a polymer electrolyte fuel cell (PEMFC), a direct methanol fuel cell (DMFC), a phosphoric acid fuel cells (PAFC), a molten carbonate fuel cell (MCFC), a solid oxide fuel cell (SOFC), an alkaline fuel cell (AFC), and the like are included, and particularly, the SOFC is operated at a very high temperature condition in which the operation temperature is about 700°C as compared with other types of fuel cells.

Meanwhile, the fuel cell is operated largely by air, fuel, and water and the fuel and the water need to be preheated at a temperature of about 300 to 400°C to be introduced to a reformer in order to be reformed to the hydrogen which can be referred to as direct fuel of the fuel cell.

In the related art, in order to preheat the fuel and the water, a large amount of heat energy using hot exhaust gas of a burner as a main heat source of the fuel cell needs to be used and development of a system capable of economically ensuring and supplying the heat energy is required.

According to the related art using a separate device called a heat exchanger for storing and using the hot heat generated from the fuel cell module, a method of transferring a heat medium such as exhaust gas generating from the fuel cell module to the heat exchanger to heat-exchange the heat medium with heating water or hot water is general.

However, according to the method, in the process of transferring the heat medium to the heat exchanger or performing heat exchange in the heat exchanger, an unnecessary heat loss occurs and the heating water or the hot water is not efficiently produced.

Further, as described above, the solid oxide fuel cell can be operated only when maintained at a high-temperature state of about 700°C, and in the case of using the heat generated in the solid oxide fuel cell for heating without control, there is a problem in that the operation of the solid oxide fuel cell is impossible or the fuel cell module is damaged.

### [DISCLOSURE]

### [Technical Problem]

The present invention has been made in an effort to provide a fuel cell module with increased thermal efficiency, a heating system using the same, and a control method thereof having advantages of stably operating the fuel cell module by efficiently preheating air and water which are introduced to the fuel cell and increasing the entire efficiency of the system by reducing the fuel to be introduced to the burner, in the case of generating electricity by using the fuel cell.

Further, the present invention has been made in an effort to provide a fuel cell module with increased thermal efficiency, a heating system using the same, and a control method thereof having advantages of more economically supplying heating water by minimizing a heat loss and simultaneously maintaining an appropriate operation temperature of a solid oxide fuel cell, in the case of using the heat generated from the fuel cell for heating.

Further, the present invention has been made in an effort to provide a fuel cell module with increased thermal efficiency, a heating system using the same, and a control method thereof having advantages of stably operating the fuel cell module by efficiently preheating air and water which are introduced to the fuel cell and increasing the entire efficiency of the system by reducing the fuel to be introduced to the burner, in the case of generating electricity by using the fuel cell or using the heat generated from the fuel cell for heating.

### [Technical Solution]

An exemplary embodiment of the present invention provides a fuel cell module in a solid oxide fuel cell module that receives fuel and air to generate electricity, including: a steam generator heating and steaming water or fuel preheated in a heat absorption water pipe and a heat absorption gas pipe; a reformer reforming the fuel supplied from the steam generator to purify hydrogen gas; a fuel cell stack generating electricity and heat by an electrochemical reaction of the hydrogen gas supplied from the reformer and air supplied from the outside; and a heat insulating material installed to cover the outside of the steam generator, the reformer, and the fuel cell stack, in which the heat absorption water pipe or the heat absorption gas pipe are disposed along the inner surface of the heat insulating material, and the water in the heat absorption water pipe and the fuel in the heat absorption gas pipe was heat-exchanged with the heat insulating material to be preheated and used for generating electricity of the fuel cell stack through the steam generator and the reformer.

Another exemplary embodiment of the present invention provides a heating system using a fuel cell module including: a fuel cell module that receives water in a heat absorption water pipe or fuel in a heat absorption gas pipe and generates electricity and heat through an electrochemical reaction of preheated water or fuel and air supplied from the outside, wherein the heat absorption water pipe and the heat absorption gas pipe are disposed along the inner surface of a heat insulating material; a hot-water tank that stores hot water heated by heat exchange between the water introduced into the heat absorption water pipe of the fuel cell module and the interior of the heat insulating material; a heating module in which the hot water supplied from the fuel cell module or the hot-water tank is used in heating; and a hot-water supply module that controls the flow of the hot-water between the fuel cell module, the hot-water tank, and the heating module according to whether the temperature of the fuel cell module is greater than, equal to, or less than a predetermined reference value and whether the heating module is operated.

Yet another exemplary embodiment of the present invention provides a control method of a heating system using a fuel cell module, in which when the temperature of the temperature sensor is greater than the predetermined reference value, the temperature supply module controls the hot water supplied from the heat absorption water pipe in the heat insulating material to be supplied to the heating module via the hot-water supply pipe and the hot-water tank and then returned to the heat absorption water pipe through the first water returning pipe and the second water returning pipe, when the temperature of the temperature sensor is equal to the predetermined reference value, the temperature supply module controls the hot water supplied from the heat absorption water pipe in the heat insulating material to be directly supplied to the heating module through the second hot-water distribution pipe and then returned to the heat absorption water pipe in the heat insulating material through the first water returning pipe and the second water returning pipe, when the temperature of the temperature sensor is less than the predetermined reference value, the hot-water supply module controls the hot water supplied from the hot-water tank to be supplied to the heating module through the first hot-water distribution pipe and then returned to the hot-water tank through the first water returning pipe and the third water returning pipe, when the heating system does not use the heating module, the hot-water supply module controls the hot water supplied from the heat absorption water pipe in the heat insulating material in order to heat the hot water stored in the hot-water tank to be supplied to the hot-water tank via the hot-water supply pipe and then returned to the heat absorption water pipe in the heat insulating material through the third water returning pipe and the second water returning pipe, and the fuel cell module is operated for a long time to supply the water heated by the heat absorption water pipe to the fuel cell module or the hot-water tank by opening the bypass valve on the hot-water supply pipe connecting the fuel cell module and the hot-water tank when the temperature of the fuel cell module is higher than the predetermined reference value.

### [Advantageous Effects]

According to the fuel cell module with increased thermal efficiency by preheating the gas according to the exemplary embodiment of the present invention, it is possible to stably operate the fuel cell module by preheating fuel and water before heating the fuel and the water required for the operation of the fuel cell module by hot exhaust gas of the burner as a main heat source of the fuel cell module and increase the entire efficiency of the system by reducing the fuel to be introduced to the burner.

Further, according to the heating system using the fuel cell module according to the exemplary embodiment of the present invention, it is possible to efficiently use the heat generated from the fuel cell module for heating by preventing an unnecessary heat loss in a process of transferring the heat generated from the fuel cell module to a heat exchanger by a heat medium or a process of heat exchanging in the heat exchanger.

Further, according to the control method of the heating system using the fuel cell module according to another exemplary embodiment of the present invention, a solid fuel cell module can be operated only when maintained at a high-temperate state, and as a result, it is possible to control heat generated from the solid fuel cell module and simultaneously efficiently use the heat for heating.

### [Description of the Drawings]

FIG. 1 is a plan view of a fuel cell module with increased thermal efficiency by preheating gas according to an exemplary embodiment of the present invention.
FIG. 2 is a front view of the fuel cell module with increased thermal efficiency by preheating the gas illustrating a heat absorption water pipe according to the exemplary embodiment of the present invention.
FIG. 3 is a front view of the fuel cell module with increased thermal efficiency by preheating the gas illustrating a heat absorption gas pipe according to the exemplary embodiment of the present invention.
FIG. 4 is a perspective view of the fuel cell module with increased thermal efficiency by preheating the gas illustrating the heat absorption water pipe and the heat absorption gas pipe as one pipe according to the exemplary embodiment of the present invention.
FIG. 5 is a plan view illustrating an heat insulating material and a heat absorption water pipe passing through the inside of the heat insulating material in the fuel cell module according to the exemplary embodiment of the present invention.
FIG. 6 is a cross-sectional view taken along line A-A of FIG. 5.
FIG. 7 is an operational schematic diagram of a heating system using a fuel cell module according to another exemplary embodiment of the present invention.
FIG. 8 is an operational state diagram of the heating system when a temperature is greater than a predetermined reference value in the fuel cell module according to another exemplary embodiment of the present invention.
FIG. 9 is an operational state diagram of the heating system when the temperature is equal to the predetermined reference value in the fuel cell module according to another exemplary embodiment of the present invention.
FIG. 10 is an operational state diagram of the heating system when the temperature is less than the predetermined reference value in the fuel cell module according to another exemplary embodiment of the present invention.
FIG. 11 is an operational state diagram of the heating system when heating is not used in the heating system using the fuel cell module according to another exemplary embodiment of the present invention.
FIG. 12 is a plan view of a fuel cell with increased thermal efficiency by preheating gas according to another exemplary embodiment of the present invention.

### [Mode for Invention]

Hereinafter, exemplary embodiments of the present invention will be described in detail with reference to the accompanying drawings. The present invention will be described with reference to exemplary embodiments illustrated in the drawings, but will be described as one exemplary embodiment, and the present invention is not limited thereto.

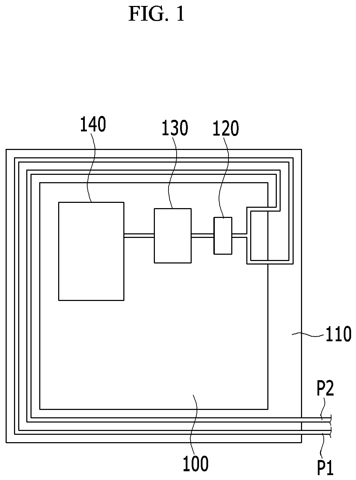

FIG. 1 is a plan view of a fuel cell module with increased thermal efficiency by preheating gas according to an exemplary embodiment of the present invention.

Referring to FIG. 1, a fuel cell module 100 with increased thermal efficiency by preheating gas according to an exemplary embodiment of the present invention includes a heat insulating material 110 maintaining the inside of the fuel cell module at a high temperature state to be easy to an electrochemical reaction, a steam generator 120 disposed in an inner space of the heat insulating material 110 and generating a steam, a fuel reformer 130 reforming the fuel by receiving the generated steam from the steam generator 120 to purify hydrogen gas, and a fuel cell stack 140 generating electricity and heat by an electrochemical reaction of the hydrogen gas supplied from the fuel reformer 130 and air supplied from the outside.

The heat insulating material 110 may be installed to cover the outside of the fuel cell module 100 to insulate the inner space of the fuel cell module 100.

The steam generator 120 is configured to generate the steam by heating water and fuel heated by a heat absorption water pipe P1 and a heat absorption gas pipe P2, respectively, and supply the steam to the fuel reformer 130.

According to an exemplary embodiment of the present invention, the heat absorption water pipe P1 is installed along the surface of the heat insulating material 110 in the heat insulating material 110 and heats the heat insulating material 110 and water by exhaust gas of a hot burner in the steam generator 120 after preheating by heat exchange to introduce the heated insulating material 110 and water to the fuel reformer 130.

Further, similarly, the heat absorption gas pipe P2 is installed along the surface of the heat insulating material 110 in the heat insulating material 110 to supply the fuel to the fuel reformer 130 while heat-exchanged with the heat insulating material 110.

In the heat absorption water pipe P1 and the heat absorption gas pipe P2, the water and the fuel preheated by heat-exchange with the heat insulating material 110 are used for power generation through the steam generator 120.

Meanwhile, the burner and a pipe in which the exhaust gas of the burner is transferred to the steam generator 120 are not illustrated. Further, external air needs to be introduced for operating the fuel cell, but it is not illustrated.

According to the configuration, since the water and the fuel are preheated by the heat absorption water pipe P1 and the heat absorption gas pipe P2 along the inner surface of the heat insulating material 110 to be introduced to the steam generator 120, the water and the fuel need not to be heated with a separate device.

Particularly, since the water and the fuel are continuously introduced to the steam generator 120 by the heat absorption water pipe P1 and heat absorption gas pipe P2, the water and the fuel can be continuously, rapidly, and evenly heated by ensuring a heating time and a contact area with the heat source for heat exchange.

In this case, the heat absorption gas pipe P2 may be installed at the inside further than the heat absorption water pipe P1 based on the center of the fuel cell module 100.

The reason is that a specific heat of the fuel introduced by the heat absorption gas pipe P2 is higher than that of the water introduced by the heat absorption water pipe P1 and thus a lot of heat energy for heating is required, and since the fuel is introduced to the heat absorption gas pipe P2 in a gas state and the water is introduced to the heat absorption water pipe P1 in a liquid state, when the water is phase-changed to the steam, pressure applied to the heat absorption water pipe P1 is increased to strain the entire fuel cell module.

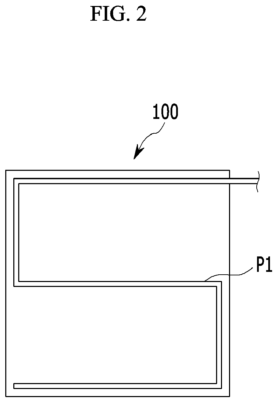

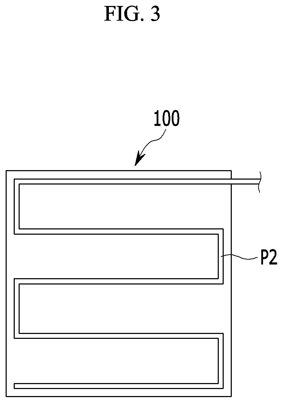

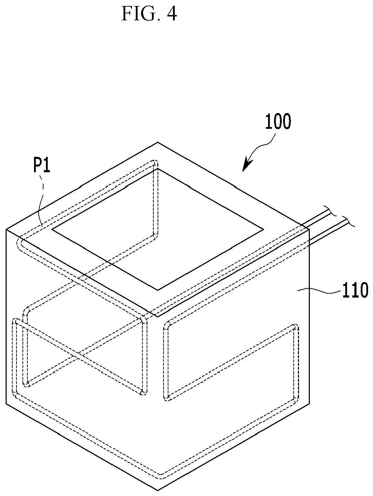

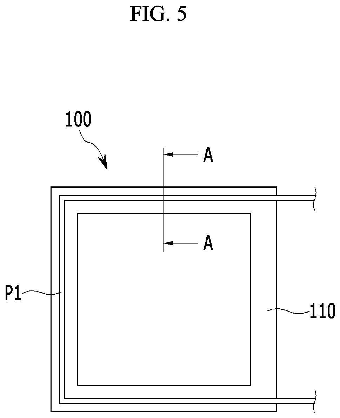

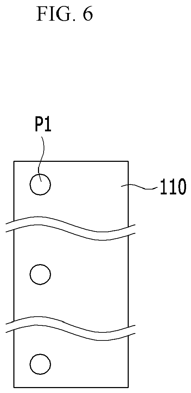

FIGS. 2 and 3 are front views of the fuel cell module with increased thermal efficiency by preheating the gas illustrating a heat absorption water pipe and a heat absorption gas pipe according to the exemplary embodiment of the present invention, FIG. 4 is a perspective view of the fuel cell module with increased thermal efficiency by preheating the gas illustrating the heat absorption water pipe and the heat absorption gas pipe as one pipe according to the exemplary embodiment of the present invention, FIG. 5 is a plan view illustrating an heat insulating material and a heat absorption water pipe passing through the inside of the heat insulating material in the fuel cell module according to the exemplary embodiment of the present invention, and FIG. 6 is a cross-sectional view taken along line A-A of FIG. 5. Other configurations of the present invention are not illustrated.

As illustrated in FIGS. 2 and 3, the heat absorption gas pipe P2 is bent several times to be longer than the heat absorption water pipe P1 along the inner surface of the heat insulating material 110 to occupy more volume.

Since a lot of heat energy for heating is required because the specific heat of the fuel introduced by the heat absorption gas pipe P2 is higher than that of the water introduced by the heat absorption water pipe P1, the heat absorption gas pipe P2 is elongated in the heat insulating material 110 to sufficiently heat the fuel by increasing a residence time of the fuel.

As illustrated in FIG. 4, the heat absorption water pipe P1 or the heat absorption gas pipe P2 may be installed in a linear or curved form along the inner surface of the heat insulating material 110, but may be installed in a "Z"-lettered shape as illustrated in FIG. 4 in order to sufficiently absorbing the heat of the heat insulating material 110 by increasing the contact area of the heat insulating material 110 and the heat absorption water pipe P1 or the heat absorption gas pipe P2 and enhance convenience of construction.

Meanwhile, the heat insulating material 110 may be configured by a total of three layers.

In order to install the heat insulating material constituted by a multilayer, in the case of heat-treating the heat insulating material, if a type of heat insulating material of each layer is different, the heat insulating materials between the layers are molded in different shapes not to be suitable to be used, and thus the heat insulating material of each layer may use the same type of heat insulating material. Each layer of the heat insulating material 110 is not illustrated.

In order to test the heat absorption water pipe P1 or the heat absorption gas pipe P2 by considering a thickness of the heat insulating material 110 with respect to an appropriate position to be installed in the heat insulating material 110 constituted by three layers made of the same material, a Morgan BTU-Block heat insulating material manufactured by Inwha H&C was tested.

As the test result, when the temperature of the fuel cell stack 140 is 750°C, so that an external temperature of the heat insulating material 110 made of the Morgan BTU-Block heat insulating material is 60°C for easy heating, a total thickness of the heat insulating material 110 may be about 150 mm and a temperature at a point of 140 mm from the inside of the heat insulating material 110 was 100°C.

Based on the test result, as illustrated in FIG. 5, the heat absorption water pipe P1 is a pipe through which water having a melting point of 100°C at 1 atm passes and thus it is most preferred that the heat absorption water pipe P1 is installed at a point of 140 mm from the inside of the heat insulating material 110.

Even though different types of heat insulating materials are used, a temperature change rate according to a thickness is constant regardless of a type, the heat absorption water pipe P1 may be installed at a point of about 14/15 from the inside of the heat insulating material 110.

That is, as illustrated in FIG. 6, the heat absorption water pipe P1 is installed in a state biased to the outermost layer when the heat insulating material 110 is constituted by three layers.

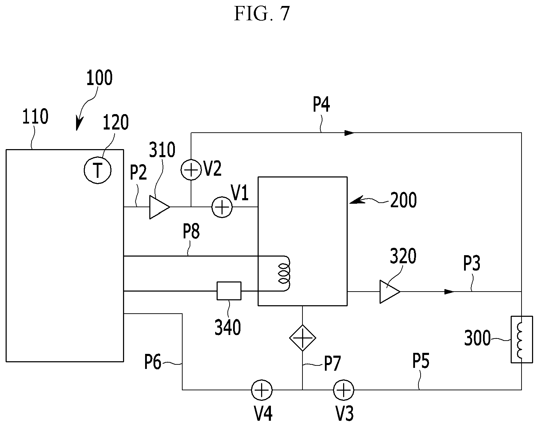

Hereinafter, a heating system using the fuel cell module according to the exemplary embodiment of the present invention configured above and an operating method thereof will be described with reference to FIGS. 7 to 11.

As illustrated in FIG. 7, a heating system using a fuel cell module according to an exemplary embodiment of the present invention includes a the fuel cell module 100 as a heat absorption system; a hot-water tank 200 that stores hot water heated by heat exchange between the water introduced into the heat absorption water pipe P1 of the fuel cell module 100 and the heat insulating material 110; a heating module 300 in which the hot water supplied from the fuel cell module 100 or the hot-water tank 200 is used; and a hot-water supply module that controls whether the hot-water is used for the fuel cell module 100 or the heating module 300 by interlocking with fuel cell module 100 or the hot-water tank 200 according to whether the temperature of the fuel cell module 100 is greater than, less than, or equal to a predetermined reference value or whether the heating module 300 is operated.

The hot-water supply module may include a hot-water supply pipe P3 that supplies the hot water heated by heat exchange between the heat absorption water pipe P1 and the heat insulating material 110 to the hot-water tank 200, a first hot-water distribution pipe P4 that distributes the hot water stored in the hot-water tank 200 to the heating module 300, a second hot-water distribution pipe P5 that directly distributes the hot water heat-exchanged with the heat insulating material 110 to the heating module 300 without passing through the hot-water tank 200, a first water returning pipe P6 for returning the hot water heat-exchanged with the heat insulating material 110 to the inside of the heat insulating material 110 or the hot-water tank 200, a second water returning pipe P7 which is connected with the first water returning pipe P6 to introduce the hot water discharged from the first water returning pipe P6 to the heat absorption water pipe P1 in the heat insulating material 110, and a third water returning pipe P8 that is connected with the first water returning pipe P6 and the second water returning pipe P7 and returns the hot water discharged from the first water returning pipe P6 to the hot-water tank 200 or returns the water of the hot-water tank 200 to the heat absorption water pipe P1 through the second water returning pipe P7.

Further, the hot-water supply module includes a first valve V2 installed in the hot-water supply pipe P3 and installed at the hot-water tank 200 side based on a connection point between the hot-water supply pipe P3 and the second hot-water distribution pipe P5, a second valve V3 installed in the second hot-water distribution pipe P5, a third valve V4 installed in the first water returning pipe P6, a fourth valve V5 installed in the second water returning pipe P7, a temperature sensor 150 installed in the fuel cell module 100, a hot-water supply pump 310 installed in the hot-water supply pipe P3 and installed at the fuel cell module 100 side based on a connection point between the hot-water supply pipe P3 and the second hot-water distribution pipe P5, a hot-water distribution pump 320 installed in the first hot-water distribution pipe P3, and a bidirectional pump 330 installed in the third water returning pipe P8. The hot-water supply module allows the temperature sensor 150 to measure a temperature of the fuel cell module 100 and controls the hot water by operating the valves and the pumps when the temperature of the fuel cell module 100 is greater than, equal to, or less than the predetermined reference value or is not used for heating.

According to the configuration, when the temperature of the temperature sensor 150 of the fuel cell module 100 is greater than the predetermined reference value, the hot water supplied from the heat absorption water pipe P1 inside the heat insulating material 110 is controlled to be supplied the heating module 300 through the hot-water supply pipe P3 and the hot-water tank 200 and then returned to the heat absorption water pipe P1 inside the heat insulating material 110 through the first water returning pipe P6 and the second water returning pipe P7.

Further, when the temperature of the temperature sensor 150 of the fuel cell module 100 is equal to the predetermined reference value, the hot water supplied from the heat absorption water pipe P1 inside the heat insulating material 110 is controlled to be directly supplied the heating module 300 through the second hot-water distribution pipe P5 and then returned to the heat absorption water pipe P1 inside the heat insulating material 110 through the first water returning pipe P6 and the second water returning pipe P7.

When the temperature of the temperature sensor 150 of the fuel cell module 100 is less than the predetermined reference value, the hot water supplied from the hot-water tank 200 is controlled to be supplied the heating module 300 through the first hot-water distribution pipe P3 and then returned to the hot-water tank 200 through the first water returning pipe P6 and the third water returning pipe P8.

Of course, unlike the case, in the case of not used for heating, in order to heat the hot water stored in the hot-water tank 200, the hot water supplied from the heat absorption water pipe P1 inside the heat insulating material 110 is controlled to be supplied to the hot-water tank 200 through the hot-water supply pipe P3 and then returned to the heat absorption water pipe P1 inside the heat insulating material 110 through the third water returning pipe P8 and the second water returning pipe P7.

Meanwhile, the heating system using the fuel cell module according to the exemplary embodiment of the present invention may further include a gas pipe P9 which can use hot gas generated from the fuel cell stack 130 in the burner in the fuel cell module 100 through the hot-water tank 200 again.

As a result, the hot gas generated from the fuel cell stack 130 is used for heating the hot water stored in the hot-water tank 200 to obtain the hotter water.

Further, the gas pipe P8 is installed to be twisted in a coil shape in the hot-water tank 200 in order to increase a contact area with the hot water in the hot-water tank 200. However, the gas pipe P8 is not limited thereto and may be manufactured in various shapes for increasing the contact area.

Further, a condenser 340 is installed in the gas pipe P9 between the fuel cell module 100 and the hot-water tank 200 to cool the hot gas including steam in the gas pipe P9 and separate and discharge the water from other gases included in the hot gas when the steam included in the hot gas is phase-changed into the water.

As such, the reason for separating the steam from the hot gas is that when the hot gas is introduced to the burner in the fuel cell module 100 to be used for combusting the fuel, if the steam is present in the hot gas, an increase in temperature of the burner is limited and particularly, in the case of using the burner as a catalyst burner, the steam seriously damages the catalyst.

That is, according to the exemplary embodiment of the present invention, the condenser 340 is installed in the gas pipe P9 before being connected to the burner of the fuel cell module 100 through the inside of the hot-water tank 200 and removes the stream from the returned hot gas to supply fuel suitable for combustion of the burner.

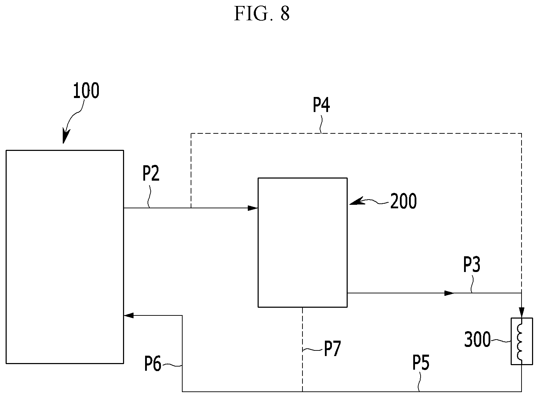

As illustrated in FIG. 8, when the temperature of the temperature sensor 150 of the heating system according to the exemplary embodiment of the present invention is greater than the predetermined reference value, the hot water supplied from the heat absorption water pipe P1 in the heat insulating material 110 of the fuel cell module 100 is supplied to the heating module 300 via the hot-water supply pipe P3 and the hot-water tank 200 and then returned to the heat absorption water pipe P1 in the heat insulating material 110 through the first water returning pipe P6 and the second water returning pipe P7.

In this case, since the temperature of the fuel cell module 100 is relatively high, the heat by the temperature is transferred to the hot-water tank 200 to cool the fuel cell module 100 and stored in the hot-water tank 200 and simultaneously transferred to the heating module 300 to be used for heating.

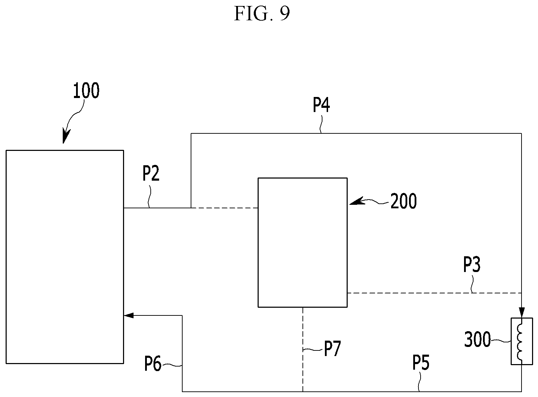

As illustrated in FIG. 9, when the temperature of the temperature sensor 150 of the heating system according to the exemplary embodiment of the present invention is equal to the predetermined reference value, the hot water supplied from the heat absorption water pipe P1 in the heat insulating material 110 of the fuel cell module 100 may be directly supplied to the heating module 300 through the second hot-water distribution pipe P5 by opening the second valve V3 installed in the second hot-water distribution pipe P5 branched from the hot-water supply pipe P3 and then returned to the heat absorption water pipe P1 in the heat insulating material 110 through the first water returning pipe P6 and the second water returning pipe P7.

The heat of the fuel cell module 100 is not stored in the hot-water tank 200, but directly used for heating to raise the temperature of the heating module 300 and collected to be used in the fuel cell module 100.

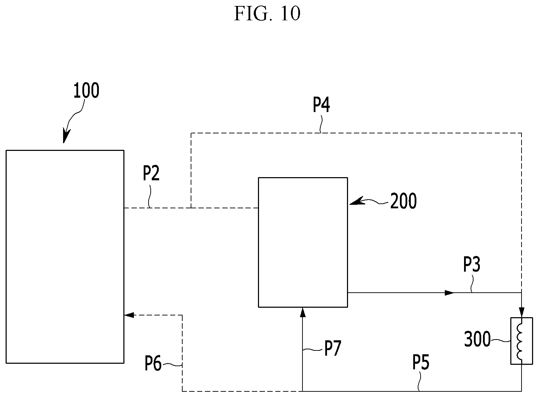

As illustrated in FIG. 10, when the temperature of the temperature sensor 150 of the heating system according to the exemplary embodiment of the present invention is less than the predetermined reference value, the hot water may be supplied to the heating module 300 by operating the hot-water distribution pump 320 installed in the first hot-water distribution pipe P4 in the hot-water tank 200 without using the heat of the fuel cell module 100 and returned to the hot-water tank 200 through the first water returning pipe P6 and the third water returning pipe P8.

The heat of the fuel cell module 100 is not used in the heating module 300 to generate the electricity by smoothly operating the fuel cell module 100 and reduce the heat of the hot-water tank 200 by using only the heat stored in the hot-water tank 200.

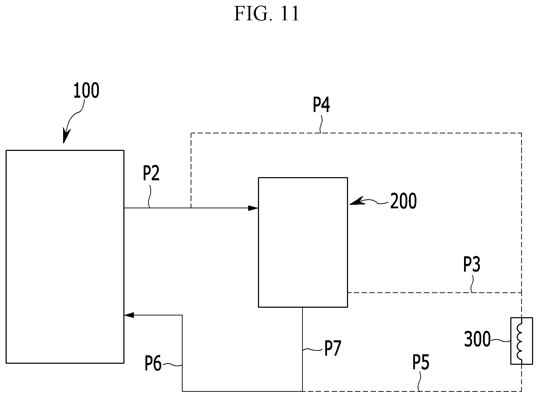

As illustrated in FIG. 11, when the heating system using the fuel cell module according to the exemplary embodiment of the present invention is not used for heating, in order to heat the hot water stored in the hot-water tank 200, the hot water supplied from the heat absorption water pipe P1 in the heat insulating material 110 is supplied to the hot-water tank 200 through the first valve V2 opened via the hot-water supply pipe P3 by operating the hot-water supply pump 310 and then returned to the heat absorption water pipe P1 in the heat insulating material 110 through the third water returning pipe P8 and the second water returning pipe P7 by operating the bidirectional pump 330.

While the heating system is not used for heating, the heat generated from the fuel cell module 100 is stored in the hot-water tank 200 to prepare for the later heating.

Meanwhile, although not illustrated in FIGS. 7 to 11, in order to appropriately balancing the amount of electricity generated by operating the fuel cell module 100 and the heat used for heating, a capacitor capable of storing the remaining electricity may be installed.

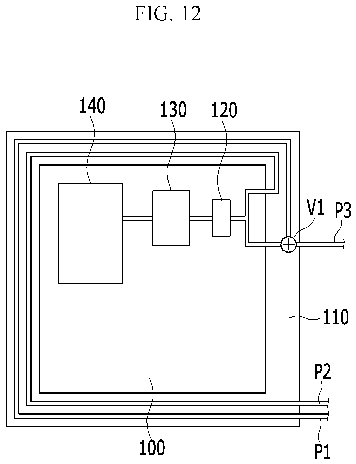

Hereinafter, a fuel cell module according to another exemplary embodiment of the present invention will be simply described with reference to FIG. 12.

As illustrated in FIG. 12, in the fuel cell module 100 according to another exemplary embodiment of the present invention, a bypass valve V1 is disposed on the hot-water supply pipe P3 connecting the fuel cell module 100 and the hot-water tank 200 to supply the water heated by the heat absorption water pipe P1 according to an operation state of the heating system to the fuel cell module 100 or the hot-water tank 200.

For example, since the fuel cell module 100 is operated for a long time to generate a lot of heat energy when the temperature of the fuel cell module 100 is higher than a normal value, the heated water may be supplied to both the fuel cell module 100 and the hot-water tank 200.

### [Industrial Availability]

As those skilled in the art would realize, the described embodiments may be modified in various different ways, all without departing from the spirit or scope of the present invention.

## Claims

1. A fuel cell module, comprising:
in a solid oxide fuel cell module that receives fuel and air to generate electricity
a steam generator heating and steaming water or fuel preheated in a heat absorption water pipe and a heat absorption gas pipe;
a reformer reforming the fuel supplied from the steam generator to purify hydrogen gas;
a fuel cell stack generating electricity and heat by an electrochemical reaction of the hydrogen gas supplied from the reformer and air supplied from the outside; and
a heat insulating material installed to cover the outside of the steam generator, the reformer, and the fuel cell stack,
wherein the heat absorption water pipe or the heat absorption gas pipe are disposed along the inner surface of the heat insulating material, and the water in the heat absorption water pipe and the fuel in the heat absorption gas pipe was heat-exchanged with the heat insulating material to be preheated and used for generating electricity of the fuel cell stack through the steam generator and the reformer.

2. The fuel cell module of claim 1, wherein:
the heat absorption water pipe or the heat absorption gas pipe is installed in a "Z"-lettered shape along the side of the heat insulating material.

3. The fuel cell module of claim 1, wherein:
the heat absorption gas pipe is installed further inside the heat absorption water pipe.

4. The fuel cell module of claim 1, wherein:
the heat absorption gas pipe is installed to be longer or further increased in volume than the heat absorption water pipe inside the heat insulating material.

5. The fuel cell module of claim 3, wherein:
the heat absorption water pipe is disposed on the outermost layer when the heat insulating material is formed of a multilayered structure made of the same material.

6. A heating system using a fuel cell module, comprising:
a fuel cell module that receives water in a heat absorption water pipe or fuel in a heat absorption gas pipe and generates electricity and heat through an electrochemical reaction of preheated water or fuel and air supplied from the outside, wherein the heat absorption water pipe and the heat absorption gas pipe are disposed along the inner surface of a heat insulating material; a hot-water tank that stores hot water heated by heat exchange between the water introduced into the heat absorption water pipe of the fuel cell module and the interior of the heat insulating material; a heating module in which the hot water supplied from the fuel cell module or the hot-water tank is used in heating; and a hot-water supply module that controls the flow of the hot-water between the fuel cell module, the hot-water tank, and the heating module according to whether the temperature of the fuel cell module is greater than, equal to, or less than a predetermined reference value and whether the heating module is operated.

7. The heating system of claim 6, further comprising:
a gas pipe for passing hot gas generated in the fuel cell system through the hot-water tank to collect the hot gas to the fuel cell system.

8. The heating system of claim 7, wherein:
the hot-water supply module includes a hot-water supply pipe that supplies water changed into the hot water by heat exchange inside the heat insulating material to the hot-water tank, a first hot-water distribution pipe that distributes the hot water stored in the hot-water tank to the heating module, a second hot-water distribution pipe that directly distributes the hot water heat-exchanged in the heat insulating material to the heating module without passing through the hot-water tank, a first water returning pipe for returning the water heat-exchanged in the heating module to the inside of the heat insulating material or the hot-water tank, a second water returning pipe which is connected with the first water returning pipe to introduce the water discharged from the first water returning pipe to the heat absorption water pipe in the heat insulating material, and a third water returning pipe that is connected with the first water returning pipe and the second water returning pipe and returns the water discharged from the first water returning pipe to the hot-water tank or returns the water of the hot-water tank to the heat absorption water pipe through the second water returning pipe.

9. The heating system of claim 8, wherein:
the hot-water supply module includes a first valve installed in the hot-water supply pipe and installed at the hot-water tank side based on a connection point between the hot-water supply pipe and the second hot-water distribution pipe, a second valve installed in the second hot-water distribution pipe, a third valve installed in the first water returning pipe, a fourth valve installed in the second water returning pipe, a hot-water supply pump installed in the hot-water supply pipe and installed at the fuel cell module side based on a connection point between the hot-water supply pipe and the second hot-water distribution pipe, a hot-water distribution pump installed in the first hot-water distribution pipe, and a bidirectional pump installed in the third water returning pipe, and the hot-water supply module is controlled according to a temperature measured by a temperature sensor installed at the inside of the fuel cell module.

10. The heating system of claim 7, further comprising:
a gas pipe for passing hot gas generated in the fuel cell system through the hot-water tank to collect the hot gas to the fuel cell system.

11. The heating system of claim 10, wherein:
the gas pipe is twisted in a coil shape at the inside of the hot-water tank.

12. The heating system of claim 10, further comprising:
a condenser separating and discharge the water from the hot gas between the gas pipe and the fuel cell module.

13. The heating system of claim 10, wherein:
a bypass valve is included on the hot-water supply pipe connecting the fuel cell module and the hot-water tank to supply the water heated by the heat absorption water pipe to the fuel cell module or the hot-water tank.

14. A control method of a heating system using a fuel cell module,
including a fuel cell module that receives water in a heat absorption water pipe or fuel in a heat absorption gas pipe and generates electricity and heat through an electrochemical reaction of preheated water or fuel and air supplied from the outside, wherein the heat absorption water pipe and the heat absorption gas pipe are disposed along the inner surface of a heat insulating material; a hot-water tank that stores hot water heated by heat exchange between the water introduced into the heat absorption water pipe of the fuel cell module and the interior of the heat insulating material; a heating module in which the hot water supplied from the fuel cell module or the hot-water tank is used in heating; and a hot-water supply module that controls the flow of the hot-water between the fuel cell module, the hot-water tank, and the heating module according to whether the temperature of the fuel cell module is greater than, equal to, or less than a predetermined reference value and whether the heating module is operated, the control method, wherein:
when the temperature of the temperature sensor is greater than the predetermined reference value, the temperature supply module controls the hot water supplied from the heat absorption water pipe in the heat insulating material to be supplied to the heating module via the hot-water supply pipe and the hot-water tank and then returned to the heat absorption water pipe through the first water returning pipe and the second water returning pipe.

15. The control method of claim 14, wherein:
when the temperature of the temperature sensor is equal to the predetermined reference value, the temperature supply module controls the hot water supplied from the heat absorption water pipe in the heat insulating material to be directly supplied to the heating module through the second hot-water distribution pipe and then returned to the heat absorption water pipe in the heat insulating material through the first water returning pipe and the second water returning pipe.

16. The control method of claim 14, wherein:
when the temperature of the temperature sensor is less than the predetermined reference value, the hot-water supply module controls the hot water supplied from the hot-water tank to be supplied to the heating module through the first hot-water distribution pipe and then returned to the hot-water tank through the first water returning pipe and the third water returning pipe.

17. The control method of claim 14, wherein:
when the heating system does not use the heating module, the hot-water supply module controls the hot water supplied from the heat absorption water pipe in the heat insulating material in order to heat the hot water stored in the hot-water tank to be supplied to the hot-water tank via the hot-water supply pipe and then returned to the heat absorption water pipe in the heat insulating material through the third water returning pipe and the second water returning pipe.

18. The control method of claim 14, wherein:
the fuel cell module is operated for a long time to supply the water heated by the heat absorption water pipe to the fuel cell module or the hot-water tank by opening the bypass valve on the hot-water supply pipe connecting the fuel cell module and the hot-water tank when the temperature of the fuel cell module is higher than the predetermined reference value.
